# EUROPÄISCHE PATENTSCHRIFT

(11) **EP 1 957 941 B1**
(45) Veröffentlichungstag und Bekanntmachung des Hinweises auf die Patenterteilung: **22.02.2017**
(21) Anmeldenummer: 06830269.4
(22) Anmeldetag: 01.12.2006
(51) Int. Cl.: G01C 21/36

(54) **FAHRERASSISTENZSYSTEM UND VERFAHREN ZUM UNTERSTÜTZEN EINES KRAFTFAHRZEUGNUTZERS**
DRIVER ASSISTANCE SYSTEM AND METHOD FOR SUPPORTING THE USER OF A MOTOR VEHICLE
SYSTEME D'ASSISTANCE À LA CONDUITE ET PROCEDE D'ASSISTANCE A L'UTILISATEUR D'UN VEHICULE AUTOMOBILE

(30) Priorität: 01.12.2005 DE 102005057264
(43) Veröffentlichungstag der Anmeldung: 20.08.2008
(73) Patentinhaber: ROBERT BOSCH GMBH, 70442 Stuttgart (DE)
(72) Erfinder: VOGT, Wilhelm, 33165 Lichtenau (DE); VARCHIM, Axel, 31180 Giesen (DE); KERSKEN, Ulrich, 31199 Diekholzen (DE); PANDAZIS, Jean-Charles, CH-1066 Epalinges (CH); MITTAZ, Michel, CH-1020 Renens (CH)
(86) Internationale Anmeldenummer: PCT/EP2006/069202
(87) Internationale Veröffentlichungsnummer: WO 2007/063127

(56) Entgegenhaltungen:
- WO-A-2004/051191
- DE-A1- 4 314 826
- JP-A- 9 089 581
- JP-A- 2003 254 771

## Beschreibung

### Technisches Gebiet

Die vorliegende Erfindung betrifft ein Fahrerassistenzsystem gemäß dem Oberbegriff des Anspruchs 1 sowie ein Verfahren gemäß dem Oberbegriff des Anspruchs 10.

### Stand der Technik

Mehrere Dokumente aus dem Stand der Technik beschreiben Systeme, die die Aufzeichnung von Navigationssensordaten ermöglichen und
- ein Positionssystem, das zum Beispiel das Global Positioning System (GPS) und Trägheitssensoren einsetzt,
- eine beschreibbare Massenspeichereinrichtung, wie zum Beispiel eine Festplatte oder einen Memory-Stick, und
- eine digitalen Karte
aufweisen.

Aufzeichnungen von Navigationssensordaten, Fahrerinformationen und Verkehrsinformationen für das Herleiten von Fahrereigenschaften und/oder von Fahrerprofilen, um sogenannte Advanced Driver Assistance System-Anwendungen (ADAS-Anwendungen) weiterzuentwickeln, sind in der Druckschrift DE 100 04 968 A1 aus dem Stand der Technik erwähnt.

Die Nutzung von Aufzeichnungen von Navigationssensordaten für die automatische Berechnung einer Route zum wahrscheinlichsten Zielort des Fahrers wird zum Beispiel in der Druckschrift DE 44 29 322 A1 aus dem Stand der Technik und in der Druckschrift DE 195 35 576 A1 aus dem Stand der Technik beschrieben.

In der Druckschrift DE 101 49 285 A1 aus dem Stand der Technik wird die Nutzung dieser Route als Eingabedaten für einige ADAS-Anwendungen ausdrücklich erwähnt.

Abgesehen davon existiert bereits die Übermittlung von Informationen aus Navigationssystemen an ADAS-Anwendungen. Durch ein Standardisierungsverfahren mit dem Namen Advanced Driver Assistance Systems Interface Specifications (ADASIS) wird eine Schnittstelle zwischen Navigationssystemen und ADAS-Anwendungen definiert.

Die meiste Zeit fährt ein Fahrer jedoch in dem Fahrer wohlbekannten Gegenden. In diesen Fällen und in normalen Fahrsituationen hat der Fahrer also eine gute Kenntnis der Straßen und benötigt keine Unterstützung durch ADAS-Anwendungen.

Wenn dem Fahrer in dem Fahrer wohlbekannten Gegenden Warnungen oder Informationen vermittelt werden, wird der Fahrer diese Warnungen oder Informationen wahrscheinlich nicht berücksichtigen und die entsprechenden Anwendungen eventuell abschalten.

Heutzutage sind ADAS-Anwendungen, wie zum Beispiel Kurvenwarnsysteme, Geschwindigkeitswarnsysteme oder Verkehrszeichenwarnsysteme, so konzipiert, dass derartige ADAS-Anwendungen manuell eingeschaltet und/oder ausgeschaltet werden und die in der Vergangenheit vom Fahrer zurückgelegten Fahrten nicht berücksichtigen.

In der WO 2004/051191 A wird ein Fahrerassistenzsystem für ein Kraftfahrzeug vorgeschlagen, mit Ausgabemitteln zur Ausgabe von Informationen an einen Fahrzeugführer des Kraftfahrzeugs und/oder Bedienmitteln zur Bedienung des Fahrerassistenzsystems durch den Fahrzeugführer, und Steuermitteln zur Steuerung der Informationsausgabe und/oder der Bedienung, welches sich dadurch auszeichnet, dass Mittel zur Bestimmung eines Belastungszustandes des Fahrzeugführers vorgesehen sind und dass die Steuermittel zur Steuerung der Informationsausgabe und/oder Bedienung in Abhängigkeit des Belastungszustandes des Fahrzeugführers ausgebildet sind. Ein erfindungsgemäßes Fahrerassistenzsystem hat den Vorteil, dass die Bedienung des Fahrerassistenzsystems sowie die Informationsausgabe durch das Fahrerassistenzsystem an die Belastung des Fahrzeugführerers angepasst ist und mithin eine Überforderung oder übermäßige Ablenkung des Fahrzeugführers vom Verkehrsgeschehen vermieden wird.

Um eine Navigationsvorrichtung bereitzustellen, um die Bewegung eines sich bewegenden Körpers passend zu leiten und die Bewegung des sich bewegenden Körpers zu unterstützen, wird in der JP 2003-254771 A vorgeschlagen, dass in der Navigationsvorrichtung auf Basis von Kartendaten ein Bewegungsweg von einer gegenwärtigen Position zu einem Ziel festgelegt wird. Die Navigationsvorrichtung stellt eine Fortbewegung eines Fahrzeugs fest und bestimmt, ob sich die gegenwärtige Position innerhalb eines Bereichs von Mesh-Daten aus mehreren die Kartendaten bildenden Mesh-Daten, worin sich das Fahrzeug in der Vergangenheit fortbewegt hat, befindet. Wenn sich die gegenwärtige Position innerhalb des Bereichs von Mesh-Daten für die früheren Fortbewegungen befindet, wird die Anzahl der Fortbewegungen um "Eins" erhöht. Wenn sich die Mesh-Daten innerhalb des Bereichs befinden, in dem sich das Fahrzeug öfter als eine vorherbestimmte Anzahl fortbewegt, werden keine Bilder zur Unterstützung der Bewegung oder wird keine Sprachführung bereitgestellt oder wird eine Menge der Daten zur Orientierungshilfe oder werden die Zeiten der Orientierungshilfe verringert. Um lästige Orientierungshilfen zu verringern, wird die Orientierungshilfe selbst auf einer Straße, auf der sich das Fahrzeug niemals fortbewegt hat, beschränkt, wenn die Straße innerhalb des wohlbekannten Bereichs liegt. Da die Navigationsvorrichtung die Bestimmung durch den Bereich vornimmt, kann die Verarbeitungslast verringert werden.

In der DE 43 14 826 A1 wird zur Bestimmung der Kraftschlussreserve eines Fahrzeuges und zur daraus resultierenden Erzeugung von Warnungen für den Fahrer vorgeschlagen, dass das Kraftschlusspotential und ein Fahrzustand des Fahrzeuges erfasst werden, das Verhältnis des Fahrzustandes zu einer durch das Kraftschlusspotential bestimmten und an die Fahrsituation angepassten Fahrgrenze bestimmt wird, und gleichzeitig das aktuelle Kraftschlusspotential bewertet und aus dem Kraftschlusspotential eine empfohlene Höchstgeschwindigkeit berechnet und deren Überschreiten dem Fahrer angezeigt wird.
Die Warnungen werden situationsabhängig erzeugt. Durch deutlich höhere Warnschwellen für Beschleunigungen in Fahrzeuglängsrichtung wird der Fahrer weder bei einer Notbremsung durch eine Warnung abgelenkt, noch bei starkem Beschleunigen durch überflüssige Warnungen irritiert.

Zum Verringern der Zeit, die für das Anlaufen einer CD nötig ist, durch Steuern des Aktualisierungsprozesses eines Programms, das in einem nichtflüchtigen Speichermittel gespeichert ist, durch das Programm eines externen Speichers, wird in der JP 09-089581 A vorgeschlagen, dass ein ROM 42 prüft, ob ein Programm normal in einen Flash-Speicher 41 geschrieben ist, und dann startet das Programm im Bestätigungsfall, um eine Öffnungsbildebene darzustellen. Dann wird die Programmversionsnummer einer CD-ROM, die von einer Informationsspeichervorrichtung 3 gelesen wird, mit jener des Speichers verglichen, um zu beurteilen, ob eine Aktualisierung des Programms nötig ist. Falls die erstgenannte verglichen mit der letztgenannten keine höhere Version ist, wird das Programm des Speichers 41 ohne Aktualisierung laufen gelassen, um eine Kartenbildebene anzuzeigen. Falls die erstgenannte eine höhere Version ist, wird die Bildebene zu einer Versionserhöhungsbildebene umgeschaltet, um den Speicher 41 zu löschen und zur Programmprüfung zurückzukehren. Im Zustand des normalen Schreibens des Programms in den Speicher 41 wird das Programm des Speichers 41 nur dann aktualisiert, wenn eine CD-ROM einer höheren Version gelesen wird.

### Darstellung der vorliegenden Erfindung: Aufgabe, Lösung, Vorteile

Ausgehend von den vorstehend dargelegten Nachteilen und Unzulänglichkeiten sowie unter Würdigung des umrissenen Stands der Technik liegt der vorliegenden Erfindung die Aufgabe zugrunde, ein Fahrerassistenzsystem der im technischen Gebiet genannten Art sowie ein Verfahren der im technischen Gebiet genannten Art so weiterzuentwickeln, dass automatisch entschieden wird, wann und/oder wo die Informationen, zum Beispiel bezüglich der aktuellen Fahrtroute und/oder bezüglich der aktiven Zielführung, ausgegeben werden, insbesondere wann und/oder wo sogenannte Advanced Driver Assistance System-Anwendungen (ADAS-Anwendungen), zum Beispiel Warnanwendungen, aktiviert oder deaktiviert werden, und zwar an die jeweilige Situation angepasst, um den Bedürfnissen des Fahrers zu entsprechen.

Die Aufgabe der vorliegenden Erfindung wird durch ein Fahrerassistenzsystem mit den im Anspruch 1 angegebenen Merkmalen sowie durch ein Verfahren mit den im Anspruch 7 angegebenen Merkmalen gelöst. Vorteilhafte Ausgestaltungen und zweckmäßige Weiterbildungen der vorliegenden Erfindung sind in den jeweiligen abhängigen Ansprüchen gekennzeichnet.

Die vorliegende Erfindung beruht im Wesentlichen darauf, die Nutzung eines Fahrerassistenzsystems zu verbessern, das auf Aufzeichnungen von Sensordaten und/oder von Positionsbestimmungsdaten basiert, sowie ein Verfahren zum Unterstützen mindestens eines Nutzers, insbesondere mindestens eines Fahrers, eines Kraftfahrzeugs zu verbessern, wobei das Verfahren auf dem Aufzeichnen von Daten basiert.

Der Schwerpunkt der vorliegenden Erfindung liegt hierbei auf der Art der Nutzung des Fahrerassistenzsystems, nämlich zur Aktivierung und/oder zur Deaktivierung von Funktionen, wobei diese, insbesondere automatische, Aktivierung und/oder diese, insbesondere automatische, Deaktivierung der Fahrerassistenzfunktionen gemäß nutzerspezifischen, insbesondere fahrerspezifischen, Erfordernissen erfolgt, die gespeichert und erlernt werden können.

Gemäß einer bevorzugten Weiterbildung der vorliegenden Erfindung kann hierbei die Erkennung des Nutzers, insbesondere des Fahrers,
- mittels mindestens einer biometrischen Methode,
- mittels des Fahrverhaltens und/oder
- mittels des genutzten Schlüssels oder mittels dergleichen
erfolgen.

Unabhängig hiervon oder in Verbindung hiermit können die nutzerspezifischen, insbesondere fahrerspezifischen, Erfordernisse gemäß einer bevorzugten Weiterbildung der vorliegenden Erfindung
- durch mindestens einen Fahrzeugsensor,
- durch mindestens einen Umfeldsensor und/oder
- durch Informationen mindestens eines Navigationssystems festgestellt oder abgeleitet werden.

Dieses Feststellen oder Ableiten der nutzerspezifischen, insbesondere fahrerspezifischen, Erfordernisse kann in bevorzugter Weise auf der Grundlage eines oder mehrerer der folgenden optionalen Kriterien erfolgen:
- Kriterium der bekannten Gegend, insbesondere in Bezug auf
   -- eine bestimmte Anzahl von Befahrungen,
   -- einen (nicht zu lange zurück liegenden) Zeitpunkt der letzten Befahrung,
   -- eine Berücksichtigung der Fahrtrichtung zum Beurteilen der Bekanntheit, wobei die Fahrstrecke in Gegenrichtung nicht als bekannt angenommen werden kann, und/oder
   -- ein Zurücksetzen der gespeicherten Anzahl von Befahrungen, wenn sich die Straßengeometrie geändert hat, zum Beispiel im Falle
      --- mindestens einer Änderungsdetektion bei Kartenupdate, das vom Map-Provider bereitgestellt oder im Rahmen eines, insbesondere automatischen, Matchingprozesses durchgeführt wird,
      --- mindestens einer durch ein Flag in der Karte angezeigten Änderung,
      --- mindestens einer Änderungsdetektion während der Fahrt, wobei die Änderung dann aber erst für die nächste Fahrt nutzbar, das heißt bei der nächsten Fahrt in der Karte angezeigt wird.
- Kriterium der Reaktion in bestimmten Situationen, insbesondere in Bezug auf
   -- ein Aussetzen einer erneuten Aktivierung, falls die Information, insbesondere die Warnmitteilung und/oder der Fahrvorschlag, beim letzten Mal oder bei den letzten Malen vom Nutzer, insbesondere vom Fahrer, ignoriert wurde, und/oder
   -- ein Übertragen der Reaktion des Nutzers, insbesondere des Fahrers, in einer konkreten Situation auf mindestens eine gleiche oder ähnliche Situation, zum Beispiel
      --- auf mindestens einen gleichen oder ähnlichen Kurvenradius,
      --- auf mindestens eine gleiche oder ähnliche Kreuzungsart,
      --- auf mindestens einen gleichen oder ähnlichen Winkel und/oder
      --- auf gleiche oder ähnliche Umfeldbedingungen, wie etwa Nässe, Sicht, Temperatur oder dergleichen.
- Kriterium der Annahme eines bestimmten nutzerspezifischen, insbesondere fahrerspezifischen, Erfordernisses bei Vorliegen widriger Umweltverhältnisse, wie etwa Glätte, Nässe, niedriger Temperatur, Wind oder dergleichen; von dieser Annahme eines Fahrererfordernisses kann gegebenenfalls dann eine Ausnahme gemacht werden, wenn der Nutzer, insbesondere der Fahrer, mindestens eine gleiche oder ähnliche Situation kurz zuvor stets gut bewältigt hat.
- Kriterium der Annahme eines bestimmten nutzerspezifischen, insbesondere fahrerspezifischen, Erfordernisses bei Vorliegen eines anormalen Fahrverhaltens entweder in Bezug auf das eigene Verhalten des Nutzers, insbesondere des Fahrers, oder in Bezug auf das Verhalten mindestens eines anderen Fahrers; hierunter fallen beispielsweise
   -- eine Anormalität in Bezug auf die Beschleunigung, auf die Geschwindigkeit oder auf dergleichen,
   -- eine Anormalität in Bezug auf die Wetterverhältnisse,
   -- eine Anormalität in Bezug auf die Fahrzeugumgebung, wie etwa in Bezug auf andere Fahrzeuge, auf die Verkehrsdichte, auf die Stauinformationen oder auf dergleichen,
   -- eine Anormalität in Bezug auf den Wochentag, auf den Feiertag, auf die Tageszeit oder auf dergleichen.

Gemäß einer besonders erfinderischen Weiterbildung des vorliegenden Fahrerassistenzsystems sowie des vorliegenden Verfahrens können die gespeicherten Daten und Informationen zur Optimierung des Anzeigezeitpunkts, zum Beispiel als Teil der Funktionssteuerung des vorliegenden Fahrerassistenzsystems sowie des vorliegenden Verfahrens, genutzt werden.

Zweckmäßigerweise kann mindestens ein Parameter des vorliegenden Fahrerassistenzsystems sowie des vorliegenden Verfahrens gemäß den nutzerspezifischen, insbesondere fahrerspezifischen, Erfordernissen angepasst werden, so etwa
- bezüglich einer kritischen Kurvengeschwindigkeit, wobei ein nutzerabhängiges, insbesondere fahrerabhängiges, Anpassen der Schwelle, gegebenenfalls unter Berücksichtigung von Tageszeit, von Umweltaspekten oder von dergleichen, möglich ist, und/oder
- bezüglich des Anzeigezeitpunkts, zum Beispiel dergestalt, dass nachts eher eine Information, insbesondere eine Warnmitteilung und/oder ein Fahrvorschlag, ausgegeben wird als tagsüber.

Der Hauptvorteil der vorliegenden Erfindung ist die Auswahl der auszugebenden Informationen, insbesondere die automatische Aktivierung und/oder die automatische Deaktivierung mindestens einer ADAS-Anwendung in Übereinstimmung mit den identifizierten fahrerspezifischen Erfordernissen.

Auf diese Weise kann eine Störung des Fahrers durch die Übermittlung von Warnungen oder von Informationen, die der Fahrer nicht benötigt, in zuverlässiger Weise vermieden werden, wodurch die Akzeptanz der entsprechenden ausgegebenen Informationen, insbesondere der entsprechenden ADAS-Anwendungen, seitens des Fahrers erhöht wird.

Zu diesem Zweck kann gemäß einer bevorzugten Ausführungsform des Fahrerassistenzsystems der vorliegenden Erfindung sowie des Verfahrens der vorliegenden Erfindung der Nutzer des Kraftfahrzeugs identifiziert werden, zum Beispiel
- mittels mindestens eines Identifizierungscodes und/oder
- mittels mindestens einer biometrischen Identifizierungseinrichtung und/oder
- mittels des Fahrzeugschlüssels und/oder
- mittels Nutzung zumindest eines Teils der aufgezeichneten Daten zum Erkennen der Fahrgewohnheiten und/oder des Fahrstils des Nutzers.

Die aufgezeichneten Daten werden in vorteilhafter Weise dem entsprechenden Nutzer zugeordnet, und mindestens ein Profil des entsprechenden Nutzers, das die entsprechenden Fahrgewohnheiten und/oder den entsprechenden Fahrstil des Nutzers widerspiegelt, wird in vorteilhafter Weise mittels zumindest eines Teils der aufgezeichneten Daten berechnet.

Auf Basis der Fahrergewohnheiten, die aus zumindest einem Teil der aufgezeichneten Daten, insbesondere aus Navigationssensoraufzeichnungen, aus Fahrzeugsensoraufzeichnungen und/oder aus Umweltsensoraufzeichnungen, abgeleitet werden, werden diejenigen Informationen ausgewählt, die nur auszugeben sind, wo und/oder wann dies am Nützlichsten ist; insbesondere werden ADAS-Anwendungen nur aktiviert, wo und/oder wann diese ADAS-Anwendungen am Nützlichsten sind.

Zu diesem Zweck können die Informationen in vorteilhafter Weise in Abhängigkeit vom jeweiligen Nutzerprofil ausgegeben werden. Demzufolge wird der Fahrer, zum Beispiel während alltäglicher Fahrten, nicht durch unnötige Warnungen und/oder durch unnötige Informationen gestört.

Gemäß einer bevorzugten Ausführungsform der vorliegenden Erfindung wird jedoch zumindest ein Teil der Informationen für die Ausgabe ausgewählt, insbesondere zumindest ein Teil der ADAS-Anwendungen automatisch aktiviert, sobald der Fahrer eine Gegend erreicht, die der Fahrer nicht gut kennt.

Um zumindest eine Gegend zu definieren, die dem Nutzer gut bekannt ist, wird gemäß einer zweckmäßigen Ausführungsform der vorliegenden Erfindung mithilfe zumindest eines Teils der aufgezeichneten Daten mindestens eine Anzahl oder mindestens eine Häufigkeit dafür berechnet, wie oft das Kraftfahrzeug und/oder der jeweilige Nutzer des Kraftfahrzeugs zumindest einen Teil der aktuellen Fahrtroute passiert hat, wobei insbesondere die Anzahl für jede Fahrtrichtung oder die Häufigkeit für jede Fahrtrichtung berechnet wird.

Falls die berechnete Anzahl oder die berechnete Häufigkeit einen definierten oder vorbestimmten Schwellenwert erreicht, insbesondere übersteigt, wird die Ausgabe zumindest eines Teils der Informationen, die zumindest einem Teil der aktuellen Fahrtroute zugeordnet sind, vorzugsweise unterdrückt.

Das Aufzeichnen und insbesondere das Speichern zumindest eines Teils der Daten kann auf mindestens einen Zeitraum oder auf mindestens ein Zeitintervall beschränkt werden, insbesondere durch den jeweiligen Nutzer. Darüber hinaus kann der jeweilige Nutzer den Schwellenwert für die Unterdrückung der Ausgabe zumindest eines Teils der Informationen definieren.

Somit ist gemäß einer vorteilhaften Ausführungsform der vorliegenden Erfindung das System, das die Aktivierung von ADAS-Anwendungen steuert, fahrerabhängig, was bedeutet, dass das Verhalten des Systems an die Fahrergewohnheiten und/oder an die Fahrmerkmale angepasst ist. Aus diesem Grund kann zumindest ein Teil der ausgegebenen Informationen und/oder das berechnete Profil des jeweiligen Nutzers aufgezeichnet werden.

Die Art und Weise, wie ein Fahrer auf die ausgegebenen Informationen, zum Beispiel auf die von der ADAS-Anwendung bereitgestellte Warnmitteilung und/oder auf den von der ADAS-Anwendung bereitgestellten Fahrvorschlag reagiert, kann berücksichtigt werden, um die Ausgabe dieser Informationen zu steuern, insbesondere um die Aktivierung der ADAS-Anwendung zu steuern, wenn der Fahrer das nächste Mal zum Ort der Warnung fährt.

Falls der Nutzer zum Beispiel häufig die ausgegebene Warnmitteilung nicht beachtet und/oder den ausgegebenen Fahrvorschlag nicht befolgt, wird die Ausgabe dieser Warnmitteilung und/oder dieses Fahrvorschlags deaktiviert.

Da die Auswahl von auszugebenden Informationen, insbesondere die Aktivierung und die Deaktivierung der ADAS-Anwendung vorzugsweise auf der Historie der Sensordaten beruht und vorzugsweise unter Einsatz mindestens eines Lernprozesses gesteuert wird, erhöht sich die Leistung einer bevorzugten Ausführungsform der vorliegenden Erfindung in dem Maße, wie sich die Anzahl der vom Fahrer befahrenen Routen oder gemachten Fahrten erhöht.

Die vorliegende Erfindung betrifft des Weiteren ein Navigationssystem, das mindestens einem Fahrerassistenzsystem gemäß der vorstehend dargelegten Art zugeordnet ist und/oder das Teil mindestens eines Fahrerassistenzsystems gemäß der vorstehend dargelegten Art ist.

Das Fahrerassistenzsystem gemäß der vorliegenden Erfindung kann jedoch mit oder ohne Eingabe eines Ziels durch den Fahrer laufen. Wenn zum Beispiel kein Zielort angegeben ist, kann die sich vor dem Kraftfahrzeug befindliche Straße, mit der die ADAS-Anwendung beaufschlagt wird, weiter als bis zur nächsten Kreuzung erweitert werden, und zwar mittels der den Straßenabschnitten oder den Straßenelementen zugeordneten Fahrthäufigkeiten.

Die vorliegende Erfindung betrifft des Weiteren ein Computerprogrammprodukt, aufweisend mindestens einen Programmteil zum Durchführen eines Verfahrens gemäß der vorstehend dargelegten Art, wobei dieser Programmteil in mindestens ein Fahrerassistenzsystem gemäß der vorstehend dargelegten Art geladen werden kann und/oder in mindestens einem Fahrerassistenzsystem gemäß der vorstehend dargelegten Art implementiert werden kann.

Die vorliegende Erfindung betrifft des Weiteren einen maschinenlesbaren, insbesondere computerlesbaren, Datenträger,
- auf dem mindestens ein Computerprogrammprodukt gemäß der vorstehend dargelegten Art aufgezeichnet und/oder gespeichert ist.

Die vorliegende Erfindung betrifft schließlich die Verwendung mindestens eines Fahrerassistenzsystems gemäß der vorstehend dargelegten Art und/oder eines Verfahrens gemäß der vorstehend dargelegten Art und/oder mindestens eines Computerprogrammprodukts gemäß der vorstehend dargelegten Art und/oder mindestens eines maschinenlesbaren, insbesondere computerlesbaren, Datenträgers gemäß der vorstehend dargelegten Art in mindestens einem Kraftfahrzeug, das optionalerweise ein Navigationssystem gemäß der vorstehend dargelegten Art aufweist.

### Kurze Beschreibung der Zeichnungen

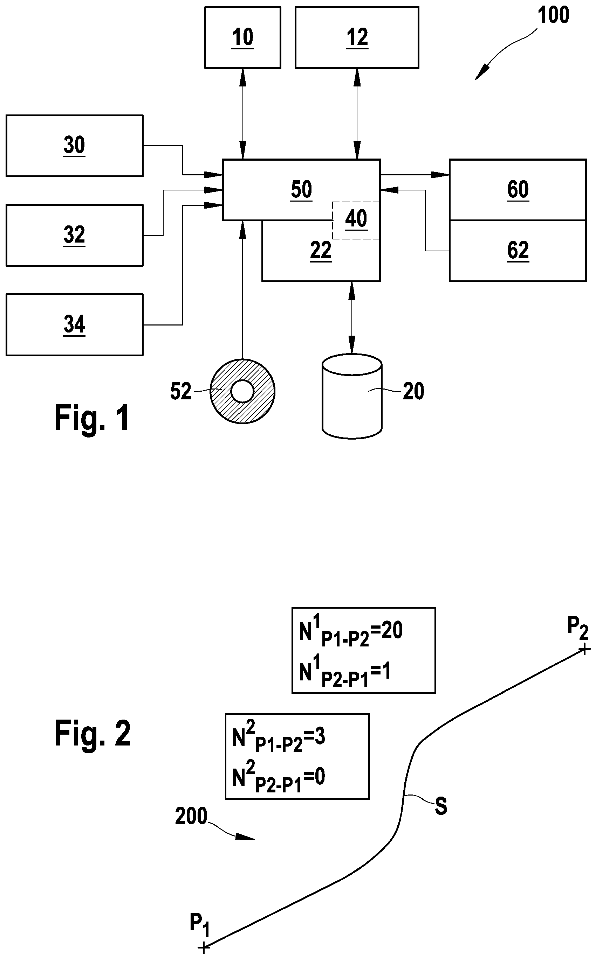

Wie bereits vorstehend erörtert, gibt es verschiedene Möglichkeiten, die Lehre der vorliegenden Erfindung in vorteilhafter Weise auszugestalten und weiterzubilden. Hierzu wird einerseits auf die den Ansprüchen 1 und 10 nachgeordneten Ansprüche verwiesen, andererseits werden weitere Ausgestaltungen, Merkmale und Vorteile der vorliegenden Erfindung nachstehend anhand des durch Fig. 1 und durch Fig. 2 veranschaulichten Ausführungsbeispiels näher erläutert.

Es zeigt:
Fig. 1 in schematischer Darstellung ein Ausführungsbeispiel für ein Fahrerassistenzsystem gemäß der vorliegenden Erfindung, das nach dem Verfahren gemäß der vorliegenden Erfindung arbeitet; und
Fig. 2 in schematischer Darstellung ein Beispiel für eine gemäß der vorliegenden Erfindung ausgestaltete Fahrerassistenzanwendung im Falle einer kurvenreichen Straße.

Gleiche oder ähnliche Ausgestaltungen, Elemente oder Merkmale sind in Fig. 1 und in Fig. 2 mit identischen oder entsprechenden Bezugszeichen versehen.

### Bester Weg zur Ausführung der vorliegenden Erfindung

Fig. 1 veranschaulicht ein Fahrerassistenzsystem 100, nämlich ein Advanced Driver Assistance System (ADAS), das eine Aufzeichnungseinrichtung 20 aufweist, nämlich eine (aus)lesbare und beschreibbare Speichereinrichtung für das Speichern von Daten, die
- durch mindestens einen Navigationssensor 30, optionalerweise
   -- mit mindestens einem GPS-Modul (Global Positioning System-Modul) und/oder
   -- mit mindestens einem Gyro(meter) und/oder
   -- mit mindestens einem Odometer (Kilometerzähler oder Wegmesser),
- durch mindestens einen Kraftfahrzeugsensor 32, wie zum Beispiel durch mindestens einen Videosensor, und/oder
- durch mindestens einen Umweltsensor 34, wie zum Beispiel durch mindestens einen Regensensor,
bereitgestellt werden.

Das ADAS 100 weist des Weiteren ein GPS (Global Positioning System) nutzendes Navigationssystem 50 sowie eine digitale Karte auf, die auf einem Speichermedium 52, zum Beispiel
- auf einem Nur-Lese-Speichermedium oder auf einem Read Only Memory (ROM), wie etwa
   -- auf einer CD-ROM (= Compact Disc-Read Only Memory) oder
   -- auf einer DVD-ROM (= Digital Versatile Disc-Read Only Memory), oder
- auf einem wiederbeschreibbaren Medium (= ReWritable = RW), wie etwa
   -- auf einer CD-RW (= Compact Disc-ReWritable) oder
   -- auf einer DVD-RW (= Digital Versatile Disc-ReWritable) oder
   -- auf einer SD-Speicherkarte (= Secure Digital Memory Card), gespeichert ist.

Das ADAS 100 wird genutzt, um die Sensordaten zu speichern und um mit den ADAS-Anwendungen 60 zu kommunizieren.

Die aufgezeichneten Daten können vor ihrer Speicherung schließlich durch eine Vor-Rechenanlage 22 vorberechnet werden. Eine Ausgabeeinrichtung 10, nämlich eine Human Machine Interface-Vorrichtung (HMI-Vorrichtung oder Mensch-Maschine-Schnittstelle) wird zum beispielsweise visuellen, akustischen und/oder haptischen Übermitteln von Navigationsanweisungen und/oder von Karteninformationen genutzt, um anzugeben, welche ADAS-Anwendungen 60 aktuell laufen.

Da die Berechnung der Häufigkeit des Passierens von Straßenabschnitten oder von Straßenelementen fahrerabhängig ist, ist das ADAS 100 in vorteilhafter Weise mit Informationen für die Identifizierung des Nutzers ausgestattet. Die Identifizierung des Fahrers kann
- mittels eines vom Nutzer einzugebenden Codes erfolgen,
- mittels biometrischer Systeme, wie zum Beispiel mittels Fingerabdruckerkennung, mittels Spracherkennung und/oder mittels Gesichtserkennung oder
- durch Nutzung der Datenhistorie der Sensoren 30, 32, 34 zum Erkennen des Fahrstils des Nutzers.

Das Navigationssystem 50 übermittelt an die ADAS-Anwendungen 60 einen elektronischen Horizont, das heißt bis zu einer bestimmten Entfernung Informationen
- über die Straßengeometrie und/oder
- über Eigenschaften um das Kraftfahrzeug herum oder vor dem Kraftfahrzeug.

Die durch ADAS-Anwendungen 60 generierten Daten, wie zum Beispiel Kurvenbegrenzungen oder Warnstellen, werden an das Navigationssystem 50 übermittelt und im wiederbeschreibbaren Speicher 20 gespeichert.

Das ADAS 100 weist weiterhin eine Steuereinheit 40 auf, um festzulegen, wo und/oder wann ADAS-Anwendungen 60 aktiviert oder deaktiviert werden sollen, um den Bedürfnissen des Fahrers zu entsprechen. Die Steuerung der Aktivierung von ADAS-Anwendungen 60 basiert auf Datennavigation, auf Datenaufzeichnungen der Kraftfahrzeugsensoren und/oder auf Datenaufzeichnungen der Umweltsensoren.

Zusätzlich kann das Einstellen und/oder das Parametrisieren der ADAS-Anwendung 60 automatisch auf der Grundlage von Daten erfolgen, die aus dem Navigationssensor 30, aus dem Kraftfahrzeugsensor 32 und/oder aus dem Umweltsensor 34 abgeleitet werden.

Die Aufzeichnungen des Navigationssensors 30 werden genutzt, um festzustellen, wie oft ein Fahrer jedes Straßenelement passiert hat. Auf der Grundlage dieser Informationen ist es möglich, ADAS-Anwendungen 60 zu deaktivieren, wenn der Fahrer ein Straßenelement häufiger als in einem Schwellenwert vorgegeben passiert hat, das heißt wenn der Fahrer sich in einer ihm wohlbekannten Gegend befindet.

Der letzte Zeitpunkt, an dem ein Straßenelement passiert worden ist, und/oder ein verstrichener maximaler Zeitschwellenwert können ebenfalls genutzt werden, um eine bekannte Gegend zu definieren. Somit wird zum Beispiel ein Straßenelement, das von einem Fahrer während der letzten zwei Jahre nicht befahren worden ist, nicht als eine gut bekannte Gegend betrachtet, selbst wenn dieses Straßenelement zuvor zwanzig Mal passiert worden ist. Die Häufigkeit und die verstrichenen Zeitschwellenwerte können zum Beispiel vom Fahrer definiert werden.

Die Häufigkeit des Passierens und der letzte Zeitpunkt des Befahrens eines Straßenelements können von der Fahrtrichtung abhängen. In einem derartigen Fall kann sich ein Straßenelement in einer bekannten Gegend befinden oder nicht von der Fahrtrichtung des Kraftfahrzeugs abhängen.

Wenn sich die Form eines Straßenelements in signifikanter Weise verändert hat, zum Beispiel nach einer Aktualisierung der digitalen Karte, wird die entsprechende Passierhäufigkeit auf Null gestellt, und das Straßenelement wird als ein neues Element betrachtet. Informationen über Änderungen von Straßenelementen können ausdrücklich vom Karten-Provider gegeben werden, oder sie können mithilfe der Daten festgestellt werden, die im wiederbeschreibbaren Speicher 20 gespeichert sind.

Falls der Fahrer keinen Zielort angegeben hat, können Straßenelementen zugeordnete Befahrhäufigkeiten genutzt werden, um den Bereich des der ADAS-Anwendung 60 übermittelten elektronischen Horizonts über die nächste Kreuzung hinaus zu erweitern.

Der/die Kraftfahrzeugsensor(en) 32 und der/die Umweltsensor(en) 34 können genutzt werden, um die Fahrbedingungen der aktuellen Route oder der aktuellen Fahrt zu bestimmen. Bei ungünstigen Bedingungen, wie zum Beispiel bei schlechtem Wetter, bei schlechter Sicht oder bei dergleichen, werden einige ADAS-Anwendungen, zum Beispiel die Kurvenwarnung, aktiviert, selbst wenn sich der Fahrer in einer ihm wohlbekannten Gegend befindet.

Durch das Anwenden statistischer Methoden auf die Datenaufzeichnungen der Sensoren 30, 32, 34 ist es möglich, ein Nutzerprofil zu bestimmen, das das Standardverhalten, zum Beispiel ein Geschwindigkeitsprofil, eines gegebenen Fahrers wiedergibt. Das Standardverhalten eines Fahrers kann von Zeitinformationen abhängen, wie zum Beispiel vom Datum, vom Wochentag und/oder vom Zeitpunkt des Tags, sowie von Fahrbedingungen.

Durch Vergleichen des aktuellen Verhaltens des Fahrers mit dem berechneten Standardverhalten des Fahrers können ADAS-Anwendungen aktiviert werden, wenn ein anormales Verhalten festgestellt wird, zum Beispiel, wenn die Geschwindigkeit des Fahrers an einem gegebenen Ort viel höher als die durchschnittliche Geschwindigkeit ist; insbesondere evaluiert das (Fahrerassistenz-)System
- in Kenntnis des berechneten Profils des jeweiligen Nutzers, insbesondere in Kenntnis des Standardfahrverhaltens des jeweiligen Nutzers, und/oder
- in Kenntnis der aktuellen Verkehrssituation vor dem Kraftfahrzeug, ob sich der Nutzer, insbesondere der Fahrer, einer gefährlichen Situation gegenüber sehen wird.

Ein anormales Verhalten eines Fahrers in Bezug auf das durchschnittliche Verhalten aller Fahrer, zum Beispiel in Bezug auf das Verhalten der Fahrer von neben diesem fahrenden Fahrzeugen, kann an einem gegebenen Ort ebenfalls in Betracht gezogen werden, um die Entscheidung zur Aktivierung von ADAS-Anwendungen zu treffen.

Reaktionen des Fahrers auf die ADAS-Anwendungen 60, zum Beispiel Reaktionen auf Nutzerinformationen 12, wie etwa auf Warnmitteilungen und/oder auf Fahrvorschläge, die von den ADAS-Anwendungen 60 übermittelt werden, werden aufgezeichnet und analysiert.

Wenn der Fahrer niemals auf eine Warnung reagiert, zum Beispiel wenn der Fahrer niemals die Geschwindigkeit verringert, wird eine Anzeige erzeugt, die darauf hinweist, dass die die Warnung übermittelnde Anwendung 60 deaktiviert werden sollte, wenn der Fahrer an der Warnstelle an- bzw. vorbeikommt. Diese Anzeige kann einem Straßenelement oder einem Abschnitt eines Straßenelements zugeordnet werden.

Zur besseren Veranschaulichung der vorliegenden Erfindung wird ihre Anwendung auf ein Kurvenwarnsystem (Curve Warning System = CWS) in Fig. 2 beschrieben, die ein Straßenelement 200 und seine zugeordneten Befahrhäufigkeiten zeigt; zwei Fahrer N1, N2 werden berücksichtigt.

Der erste Fahrer N1 fuhr zwanzig Mal von einem ersten Punkt P1 zu einem weiteren Punkt P2 des Straßenelements 200 und ein Mal vom weiteren Punkt P2 zum ersten Punkt P1. Der weitere Fahrer N2 fuhr drei Mal vom ersten Punkt P1 zum weiteren Punkt P2 und noch nie vom weiteren Punkt P2 zum ersten Punkt P1.

Unter der Annahme, dass der Häufigkeitsschwellenwert auf zehn angesetzt wird, wird das Kurvenwarnsystem für den ersten Fahrer N1 deaktiviert, wenn der erste Fahrer N1 vom ersten Punkt P1 zum weiteren Punkt P2 fährt, und die S-Kurve (= Bezugszeichen S in Fig. 2) wird nicht angekündigt, außer wenn schlechte Fahrbedingungen oder ein anormales Verhalten festgestellt werden.

Wenn die Aktivierung des Kurvenwarnsystems von der Fahrtrichtung abhängig ist, wird das Kurvenwarnsystem für den ersten Fahrer N1 eingeschaltet, wenn der erste Fahrer N1 vom weiteren Punkt P2 zum ersten Punkt P1 fährt, und für den weiteren Fahrer N2 wird das Kurvenwarnsystem in beiden Richtungen eingeschaltet.

Wenn es keine Abhängigkeit der Aktivierung des Kurvenwarnsystems von der Fahrtrichtung gibt, wird das Kurvenwarnsystem nur für den weiteren Fahrer N2 in beiden Richtungen und nicht für den ersten Fahrer N1 eingeschaltet.

Unter der Annahme, dass der Fahrer, wenn er vom ersten Punkt P1 zum weiteren Punkt P2 fährt, üblicherweise am ersten Punkt P1 mit einer durchschnittlichen Geschwindigkeit von 53 Kilometern pro Stunde (km/h) an- bzw. vorbeikommt, und unter der Annahme, dass der Fahrer am ersten Punkt P1 mit einer Geschwindigkeit an- bzw. vorbeikommt, die 75 km/h entspricht, wird das Kurvenwarnsystem aktiviert, weil der Unterschied von 22 km/h zwischen beiden Geschwindigkeiten zu groß ist und das aktuelle Verhalten des Fahrers als anormal betrachtet wird.

Das Nutzen einer durchschnittlichen Geschwindigkeit in Abhängigkeit von Zeitinformationen, zum Beispiel in Abhängigkeit vom Wochentag und/oder in Abhängigkeit vom Zeitpunkt des Tages und in Abhängigkeit von Fahrbedingungen, zum Beispiel in Abhängigkeit vom Wetter, in Abhängigkeit von der Sicht und/oder in Abhängigkeit von der Temperatur, führt zu größerer Genauigkeit bei der Definition des Standardverhaltens des Fahrers und vermeidet eine ungewünschte Aktivierung des Kurvenwarnsystems.

Als ein Beispiel wird der Fall eines Fahrers betrachtet, der jeden Tag zu seinem Büro fährt. Aufgrund des Verkehrsstaus ist die durchschnittliche Geschwindigkeit niedrig. Unter der Annahme, dass der Fahrer auf der gleichen Route am Sonntag zu fahren pflegt, ist seine durchschnittliche Geschwindigkeit sonntags viel höher, denn der Verkehr ist sonntags unbehindert.

Falls das Verhalten des Fahrers vom Wochentag abhängt, werden die hohen Geschwindigkeiten an Sonntagen nicht als anormales Verhalten betrachtet, und das Kurvenwarnsystem wird nicht aktiviert. Wenn jetzt an einem Werktag die aktuelle Geschwindigkeit höher ist als die durchschnittliche Geschwindigkeit an diesem Werktag, jedoch ähnlich wie die Geschwindigkeit an Sonntagen, wird das Kurvenwarnsystem ebenfalls nicht aktiviert.

Eine Geschwindigkeit, die niedriger als die übliche Geschwindigkeit ist, wird nur als anormal betrachtet, wenn diese Geschwindigkeit auf schlechtes Wetter oder auf schlechte Sichtbedingungen zurückzuführen ist und wenn diese Geschwindigkeit nicht durch ein vorausfahrendes Kraftfahrzeug bedingt ist.

In derartigen Situationen, wenn der Fahrer von selbst seine Geschwindigkeit verringert, bedeutet dies, dass der Fahrer eine bestimmte Unterstützung benötigt, und aus diesem Grund wird das Kurvenwarnsystem aktiviert. Für das Feststellen von schlechten Wetterbedingungen und von schlechter Sicht ist der Einsatz der Kraftfahrzeugsensoren 32 und/oder der Umweltsensoren 34 vorgesehen.

Zusätzlich zur Aktivierung und zur Deaktivierung können Aufzeichnungen der Sensoren 30, 32, 34 genutzt werden, um Parameter des Kurvenwarnsystems anzupassen.

Wenn sich beim Beobachten der Reaktion des Nutzers, insbesondere des Fahrers, auf mindestens eine Kurvenwarnung oder auf mindestens eine Warnung des Kurvenwarnsystems ergibt, dass eine Kurvenwarnung während Fahrten, zum Beispiel bei Nacht und/oder bei Nässe und/oder bei niedriger Temperatur und/oder bei dergleichen, zu früh ausgegeben wird, kann in vorteilhafter Weise das Berechnen des Abstands bis zu einer Kurve, bei der eine Kurvenwarnung ausgegeben wird, hinsichtlich der Umweltbedingungen, zum Beispiel bei Nacht und/oder bei Nässe und/oder bei niedriger Temperatur und/oder bei dergleichen, verändert werden.

Ein weiteres Beispiel von Anpassungen betrifft die den Kurven zugeordnete empfohlene Geschwindigkeit, die durch das Kurvenwarnsystem festgestellt wird. Durch das Analysieren der durchschnittlichen Geschwindigkeit des Fahrers in Kurven wird die Anpassung der empfohlenen Geschwindigkeit vorgenommen.

Wenn die durchschnittliche Geschwindigkeit des Fahrers in Kurven ständig höher (bzw. ständig niedriger) als die im Kurvenwarnsystem berechneten empfohlenen Geschwindigkeiten ist, werden die letzteren Geschwindigkeiten erhöht (bzw. reduziert). Was die Aktivierung und die Deaktivierung des Kurvenwarnsystems betrifft, kann die Anpassung von Parametern der Zeitinformationen und der Fahrbedingungen abhängen.

## Patentansprüche

1. Fahrerassistenzsystem (100), insbesondere Advanced Driver Assistance System (ADAS), für mindestens ein Kraftfahrzeug, wobei das Fahrerassistenzsystem (100) mindestens eine Ausgabeeinrichtung (10), insbesondere mindestens eine Schnittstellenvorrichtung, zum Ausgeben mindestens einer, zum Beispiel auf die aktuelle Fahrtroute und/oder auf die aktive Zielführung bezogenen, Information (12), insbesondere zum Ausgeben mindestens eines Warnhinweises und/oder mindestens eines Fahrvorschlags, zum Beispiel zum Ausgeben mindestens einer Kurvenwarnung, mindestens einer Geschwindigkeitswarnung und/oder mindestens einer Verkehrszeichenwarnung, aufweist, wobei
- mindestens eine Aufzeichnungseinrichtung (20), insbesondere mindestens eine Speichereinheit, der durch mindestens eine Positionsbestimmungseinheit und/oder durch mindestens eine Sensoreinheit (30, 32, 34)
-- Daten bezüglich der Fortbewegung, insbesondere bezüglich der Navigation, zum Beispiel bezüglich der Fahrtrichtung und/oder bezüglich zumindest eines Teils der Fahrtroute, des Kraftfahrzeugs und/oder
-- Daten bezüglich des Kraftfahrzeugs, insbesondere bezüglich der Geschwindigkeit des Kraftfahrzeugs, und/oder
-- Daten bezüglich der Umgebung des Kraftfahrzeugs, insbesondere bezüglich der Wetterbedingungen und/oder bezüglich der Straßenbedingungen, zuführbar sind; und
- mindestens eine Steuereinheit (40) zum Auswählen zumindest eines Teils der in Abhängigkeit von zumindest einem Teil der in der Speichereinrichtung (20) aufgezeichneten Daten auszugebenden Informationen (12), insbesondere zum Aktivieren und/oder zum Deaktivieren der Ausgabe zumindest eines Teils der Informationen (12) in Abhängigkeit von den aufgezeichneten Daten, vorgesehen sind, wobei für das Ausgeben des Warnhinweises und/oder des Fahrvorschlags mindestens eine kritische Geschwindigkeit erlernbar ist, wobei mittels Analysieren der durchschnittlichen Geschwindigkeit des Nutzers in Kurven mindestens eine einer jeweiligen Kurve zugeordnete, durch das Fahrerassistenzsystem (100) feststellbare empfohlene Geschwindigkeit anpassbar ist, und wobei das Fahrerassistenzsystem (100), insbesondere Kurvenwarnsystem, dazu ausgebildet ist, die berechnete empfohlene Geschwindigkeit zu erhöhen bzw. zu reduzieren , wenn die durchschnittliche Geschwindigkeit des Nutzers in Kurven permanent höher bzw. permanent niedriger als die im Fahrerassistenzsystem (100) berechnete empfohlene Geschwindigkeit ist, wobei in Bezug auf das Aktivieren und/oder in Bezug auf das Deaktivieren des Fahrerassistenzsystems (100), insbesondere des Kurvenwarnsystems, das Anpassen der empfohlenen Geschwindigkeit von mindestens einem Parameter der Zeitinformationen und/oder der Fahrbedingungen abhängen kann.

2. Fahrerassistenzsystem gemäß Anspruch 1, **dadurch gekennzeichnet, dass** das Fahrerassistenzsystem (100) dazu ausgelegt ist,
- den jeweiligen, das Kraftfahrzeug gegenwärtig benutzenden Nutzer, insbesondere
-- mittels mindestens eines Identifizierungscodes und/oder
-- mittels mindestens einer biometrischen Identifizierungseinrichtung und/oder
-- mittels des Fahrzeugschlüssels und/oder
-- mittels Nutzung zumindest eines Teils der aufgezeichneten Daten zum Erkennen der Fahrgewohnheiten und/oder des Fahrstils des Nutzers, zu identifizieren,
- mindestens ein die jeweiligen Fahrgewohnheiten und/oder den jeweiligen Fahrstil des Nutzers widerspiegelndes Profil des jeweiligen Nutzers mittels zumindest eines Teils der aufgezeichneten Daten zu berechnen und
- die in Abhängigkeit vom Profil des jeweiligen Nutzers auszugebenden Informationen (12) auszuwählen, wobei insbesondere die Ausgabe zumindest eines Teils der Informationen (12) aktivierbar ist, wenn sich die aktuellen Fahrgewohnheiten und/oder der aktuelle Fahrstil des Nutzers wesentlich vom berechneten Profil des jeweiligen Nutzers unterscheiden.

3. Fahrerassistenzsystem gemäß Anspruch 1 oder 2, **dadurch gekennzeichnet, dass** das Fahrerassistenzsystem (100) durch Vergleichen des aktuellen Fahrverhaltens des Nutzers, insbesondere der aktuellen Fahrgewohnheiten und/oder des aktuellen Fahrstils des Nutzers, mit dem berechneten Profil des jeweiligen Nutzers, insbesondere mit den berechneten Standardfahrgewohnheiten und/oder mit dem berechneten Standardfahrstil des jeweiligen Nutzers, aktivierbar ist, insbesondere wenn ein anormales aktuelles Fahrverhalten des Nutzers feststellbar ist, zum Beispiel
- wenn die Fahr-geschwindigkeit des Nutzers an einem gegebenen Ort wesentlich höher als die, insbesondere für diesen Nutzer und/oder für mindestens einen anderen Fahrer gespeicherte, durchschnittliche Fahrgeschwindigkeit ist und/oder
- wenn das aktuelle Fahrverhalten des Nutzers in Bezug auf das durchschnittliche Fahrverhalten weiterer oder aller Fahrer, wie etwa in Bezug auf das Fahrverhalten der Fahrer von neben dem Kraftfahrzeug des Nutzers fahrenden Kraftfahrzeugen, signifikant abweicht, insbesondere mindestens einen definierten Schwellenwert unter- oder überschreitet.

4. Fahrerassistenzsystem gemäß mindestens einem der Ansprüche 1 bis 3, **dadurch gekennzeichnet, dass** zusätzlich zum Aktivieren und/oder zum Deaktivieren mindestens ein beim Ausgeben des Warnhinweises und/oder des Fahrvorschlags relevanter Parameter mittels der Aufzeichnungen der Sensoreinheit (30, 32, 34) anpassbar, insbesondere der Zeitpunkt der Kurvenwarnung, optimierbar, ist.

5. Fahrerassistenzsystem gemäß mindestens einem der Ansprüche 1 bis 4, **dadurch gekennzeichnet, dass** das Fahrerassistenzsystem (100) dazu ausgelegt ist,
- das Aufzeichnen, insbesondere das Speichern, zumindest eines Teils der Daten auf mindestens einen Zeitraum oder auf mindestens ein Zeitintervall zu beschränken, insbesondere das Alter der aufgezeichneten, zum Beispiel gespeicherten, Daten durch den jeweiligen Nutzer zu limitieren, und/oder
- mittels zumindest eines Teils der aufgezeichneten Daten mindestens eine Anzahl oder mindestens eine Häufigkeit dafür zu berechnen, wie oft das Kraftfahrzeug und/oder der jeweilige Nutzer des Kraftfahrzeugs zumindest einen Teil der aktuellen Fahrtroute passiert hat, wobei insbesondere die Anzahl für jede Fahrtrichtung oder die Häufigkeit für jede Fahrtrichtung berechenbar ist, und/oder
- die Ausgabe zumindest eines Teils der zumindest einem Teil der aktuellen Fahrtroute zugeordneten Informationen (12) zu unterdrücken, falls die berechnete Anzahl oder die berechnete Häufigkeit mindestens einen definierten oder vorbestimmten Schwellenwert erreicht, insbesondere übersteigt.

6. Fahrerassistenzsystem gemäß mindestens einem der Ansprüche 1 bis 5, **dadurch gekennzeichnet, dass** der Aufzeichnungseinrichtung (20)
- Daten (62) bezüglich zumindest eines Teils der ausgegebenen Informationen (12) und/oder
- das Profil des jeweiligen Nutzers, insbesondere die Reaktion des jeweiligen Nutzers auf die ausgegebenen Informationen (12), zum Beispiel Informationen (12), ob der jeweilige Nutzer die Warnmitteilung beachtet hat und/oder dem Fahrvorschlag gefolgt ist, wobei im Falle, dass der Nutzer auf zumindest einen Teil der ausgegebenen Informationen (12) nicht mit mindestens einer definierten oder vorbestimmten Häufigkeit reagiert, die Ausgabe von zumindest demjenigen Teil der Informationen (12), auf die der Nutzer nicht reagiert hat, deaktivierbar ist,
zuführbar sind.

7. Verfahren zum Unterstützen mindestens eines Nutzers eines Kraftfahrzeugs, insbesondere mindestens eines Fahrers eines Kraftfahrzeugs, wobei mindestens eine, zum Beispiel auf die aktuelle Fahrtroute und/oder auf die aktive Zielführung bezogene, Information (12), insbesondere mindestens eine Warnmitteilung und/oder mindestens ein Fahrvorschlag, zum Beispiel mindestens eine Kurvenwarnung, mindestens eine Geschwindigkeitswarnung und/oder mindestens eine Verkehrszeichenwarnung ausgegeben wird, wobei
- durch das Aufzeichnen, insbesondere das Speichern,
-- von Daten bezüglich der Fortbewegung, insbesondere bezüglich der Navigation, zum Beispiel bezüglich der Fahrtrichtung und/oder bezüglich zumindest eines Teils der Fahrtroute, des Kraftfahrzeugs und/oder
-- von Daten bezüglich des Kraftfahrzeugs, insbesondere bezüglich der Geschwindigkeit des Kraftfahrzeugs, und/oder
-- von Daten bezüglich der Umgebung des Kraftfahrzeugs, insbesondere bezüglich der Wetterbedingungen und/oder bezüglich der Straßenbedingungen, und
- das Auswählen zumindest eines Teils der in Abhängigkeit von zumindest einem Teil der aufgezeichneten Daten auszugebenden Informationen (12), insbesondere zum Aktivieren und/oder zum Deaktivieren der Ausgabe zumindest eines Teils der Informationen (12) in Abhängigkeit von den aufgezeichneten Daten, vorgesehen ist, wobei für das Ausgeben des Warnhinweises und/oder des Fahrvorschlags mindestens eine kritische Geschwindigkeit erlernt wird, wobei mittels Analysieren der durchschnittlichen Geschwindigkeit des Nutzers in Kurven mindestens eine einer jeweiligen Kurve zugeordnete festgestellte empfohlene Geschwindigkeit angepasst wird, und wobei die berechnete empfohlene Geschwindigkeit erhöht bzw. reduziert wird, wenn die durchschnittliche Geschwindigkeit des Nutzers in Kurven permanent höher bzw. permanent niedriger als die berechnete empfohlene Geschwindigkeit ist, wobei in Bezug auf das Aktivieren und/oder in Bezug auf das Deaktivieren das Anpassen der empfohlenen Geschwindigkeit von mindestens einem Parameter der Zeitinformationen und/oder der Fahrbedingungen abhängig gemacht werden kann.

8. Verfahren gemäß Anspruch 7, **gekennzeichnet**
- **durch** das Identifizieren des jeweiligen, das Kraftfahrzeug gegenwärtig benutzenden Nutzers,
- **durch** das Berechnen mindestens eines die jeweiligen Fahrgewohnheiten und/oder den jeweiligen Fahrstil des Nutzers widerspiegelnden Profils des jeweiligen Nutzers mittels zumindest eines Teils der aufgezeichneten Daten, insbesondere das Berechnen mindestens einer Anzahl oder mindestens einer Häufigkeit dafür, wie oft das Kraftfahrzeug und/oder der jeweilige Nutzer des Kraftfahrzeugs zumindest einen Teil der aktuellen Fahrtroute passiert hat, wobei optionalerweise die Anzahl für jede Fahrtrichtung oder die Häufigkeit für jede Fahrtrichtung berechnet wird, und
- **durch** das Auswählen der in Abhängigkeit vom Profil des jeweiligen Nutzers auszugebenden Informationen (12), wobei insbesondere
-- die Ausgabe zumindest eines Teils der Informationen (12) aktiviert wird, wenn sich die aktuellen Fahrgewohnheiten und/oder der aktuelle Fahrstil des jeweiligen Nutzers wesentlich vom berechneten Profil des jeweiligen Nutzers unterscheiden, und/oder
-- die Ausgabe zumindest eines Teils der zumindest einem Teil der aktuellen Fahrtroute zugeordneten Informationen (12) unterdrückt wird, falls die berechnete Anzahl oder die berechnete Häufigkeit mindestens einen definierten oder vorbestimmten Schwellenwert erreicht, insbesondere übersteigt.

9. Verfahren gemäß Anspruch 7 oder 8, **dadurch gekennzeichnet, dass** das Aktivieren durch Vergleichen des aktuellen Fahrverhaltens des Nutzers, insbesondere der aktuellen Fahrgewohnheiten und/oder des aktuellen Fahrstils des Nutzers, mit dem berechneten Profil des jeweiligen Nutzers, insbesondere mit den berechneten Standardfahrgewohnheiten und/oder mit dem berechneten Standardfahrstil des jeweiligen Nutzers, erfolgt, insbesondere wenn ein anormales aktuelles Fahrverhalten des Nutzers festgestellt wird, zum Beispiel
- wenn die Fahrgeschwindigkeit des Nutzers an einem gegebenen Ort wesentlich höher als die, insbesondere für diesen Nutzer und/oder für mindestens einen anderen Fahrer gespeicherte, durchschnittliche Fahrgeschwindigkeit ist und/oder
- wenn das aktuelle Fahrverhalten des, Nutzers in Bezug auf das durchschnittliche Fahrverhalten weiterer oder aller Fahrer, wie etwa in Bezug auf das Fahrverhalten der Fahrer von neben dem Kraftfahrzeug des Nutzers fahrenden Kraftfahrzeugen, signifikant abweicht, insbesondere mindestens einen definierten Schwellenwert unter- oder überschreitet.

10. Verfahren gemäß mindestens einem der Ansprüche 7 bis 9, **dadurch gekennzeichnet, dass** zusätzlich zum Aktivieren und/oder zum Deaktivieren mindestens ein beim Ausgeben des Warnhinweises und/oder des Fahrvorschlags relevanter Parameter mittels der Aufzeichnungen der Sensoreinheit (30, 32, 34) angepasst, insbesondere der Zeitpunkt der Kurvenwarnung optimiert, wird.

11. Verfahren gemäß mindestens einem der Ansprüche 7 bis 10, **dadurch gekennzeichnet,**
- **dass** das Aufzeichnen, insbesondere das Speichern, zumindest eines Teils der Daten auf mindestens einen Zeitraum oder auf mindestens ein Zeitintervall beschränkt wird, insbesondere dass das Alter der aufgezeichneten, zum Beispiel gespeicherten, Daten durch den jeweiligen Nutzer limitiert wird, und/oder
- **dass** mittels zumindest eines Teils der aufgezeichneten Daten mindestens eine Anzahl oder mindestens eine Häufigkeit dafür berechnet wird, wie oft das Kraftfahrzeug und/oder der jeweilige Nutzer des Kraftfahrzeugs zumindest einen Teil der aktuellen Fahrtroute passiert hat, wobei insbesondere die Anzahl für jede Fahrtrichtung oder die Häufigkeit für jede Fahrtrichtung berechnet wird, und/oder
- **dass** der Schwellenwert für das Unterdrücken der Ausgabe zumindest eines Teils der Informationen (12) definiert wird, insbesondere durch den jeweiligen Nutzer.

12. Verfahren gemäß mindestens einem der Ansprüche 7 bis 11, **dadurch gekennzeichnet, dass**
- Daten (62) bezüglich zumindest eines Teils der ausgegebenen Informationen (12) und/oder
- das Profil des jeweiligen Nutzers, insbesondere die Reaktion des jeweiligen Nutzers auf die ausgegebenen Informationen (12), zum Beispiel Informationen (12), ob der jeweilige Nutzer die Warnmitteilung beachtet hat und/oder dem Fahrvorschlag gefolgt ist, wobei im Falle, dass der Nutzer auf zumindest einen Teil der ausgegebenen Informationen (12) nicht mit mindestens einer definierten oder vorbestimmten Häufigkeit reagiert, die Ausgabe von zumindest demjenigen Teil der Informationen (12), auf die der Nutzer nicht reagiert hat, deaktiviert wird,
zugeführt werden.

13. Computerprogrammprodukt, aufweisend mindestens einen Programmteil zum Durchführen eines Verfahrens gemäß mindestens einem der Ansprüche 8 bis 12, wobei dieser Programmteil in mindestens ein Fahrerassistenzsystem (100) gemäß mindestens einem der Ansprüche 1 bis 6 ladbar ist oder in mindestens einem Fahrerassistenzsystem (100) gemäß mindestens einem der Ansprüche 1 bis 6 implementierbar ist.

14. Maschinenlesbarer, insbesondere computerlesbarer, Datenträger,
- auf dem mindestens ein Computerprogrammprodukt gemäß Anspruch 13 aufgezeichnet und/oder gespeichert ist.

15. Verwendung mindestens eines Fahrerassistenzsystems (100) gemäß mindestens einem der Ansprüche 1 bis 6 und/oder eines Verfahrens gemäß mindestens einem der Ansprüche 7 bis 12 und/oder mindestens eines Computerprogrammprodukts gemäß Anspruch 13 und/oder mindestens eines maschinenlesbaren, insbesondere computerlesbaren, Datenträgers gemäß Anspruch 14 in mindestens einem Kraftfahrzeug, das optionalerweise ein Navigationssystem (50) aufweist.

## Claims

1. Driver assistance system (100), particularly an advanced driver assistance system (ADAS), for at least one motor vehicle, wherein the driver assistance system (100) has at least one output device (10), particularly at least one interface apparatus, for outputting at least one piece of information (12), for example relating to the current journey route and/or to the active route guidance, particularly for outputting at least one warning and/or at least one driving proposal, for example for outputting at least one bend warning, at least one speed warning and/or at least one road sign warning, wherein
- at least one recording device (20), particularly at least one memory unit, to which at least one position finding unit and/or at least one sensor unit (30, 32, 34) can supply
-- data concerning the movement, particularly concerning the navigation, for example concerning the direction of travel and/or concerning at least some of the journey route, of the motor vehicle and/or
-- data concerning the motor vehicle, particularly concerning the speed of the motor vehicle, and/or
-- data concerning the surroundings of the motor vehicle, particularly concerning the weather conditions and/or concerning the road conditions; and
- at least one control unit (40) for selecting at least some of the information (12) to be output on the basis of at least some of the data recorded in the memory device (20), particularly for activating and/or deactivating the output of at least some of the information (12) on the basis of the recorded data, are provided, wherein output of the warning and/or of the driving proposal can involve at least one critical speed being learned, wherein analysis of the average speed of the user on bends can be used to adapt at least one recommended speed that is associated with a respective bend and detectable by the driver assistance system (100), and wherein the driver assistance system (100), particularly the bend warning system, is designed to increase or reduce the computed recommended speed if the average speed of the user on bends is permanently higher or permanently lower than the recommended speed computed in the driver assistance system (100), wherein in relation to the activation and/or in relation to the deactivation of the driver assistance system (100), particularly the bend warning system, the adaptation of the recommended speed may be dependent on at least one parameter of the time information and/or of the driving conditions.

2. Driver assistance system according to Claim 1, **characterized in that** the driver assistance system (100) is designed
- to identify the respective user currently using the motor vehicle, particularly
-- by means of at least one identification code and/or
-- by means of at least one biometric identification device and/or
-- by means of the vehicle key and/or
-- by means of use of at least some of the recorded data to identify the driving habits and/or the driving style of the user,
- to compute at least one profile of the respective user that reflects the respective driving habits and/or the respective driving style of the user by means of at least some of the recorded data, and
- to select the information (12) to be output on the basis of the profile of the respective user, wherein particularly the output of at least some of the information (12) is activable if the current driving habits and/or the current driving style of the user differ(s) substantially from the computed profile of the respective user.

3. Driver assistance system according to Claim 1 or 2, **characterized in that** the driver assistance system (100) is activable by comparing the current driving behaviour of the user, particularly the current driving habits and/or the current driving style of the user, with the computed profile of the respective user, particularly with the computed standard driving habits and/or with the computed standard driving style of the respective user, particularly if an abnormal current driving behaviour of the user is detectable, for example
- if the driving speed of the user at a given location is substantially higher than the average driving speed, particularly that stored for this user and/or for at least one other driver, and/or
- if the current driving behaviour of the user differs significantly, particularly is below or above at least one defined threshold value, in relation to the average driving behaviour of further or all drivers, such as in relation to the driving behaviour of the drivers of motor vehicles travelling next to the motor vehicle of the user, for example.

4. Driver assistance system according to at least one of Claims 1 to 3, **characterized in that** in addition to the activation and/or deactivation, at least one parameter that is relevant on output of the warning and/or of the driving proposal is adaptable, in particular the time of the bend warning is optimizable, by means of the recordings of the sensor unit (30, 32, 34).

5. Driver assistance system according to at least one of Claims 1 to 4, **characterized in that** the driver assistance system (100) is designed
- to limit the recording, particularly the storage, of at least some of the data to at least one period or to at least one interval of time, particularly to limit the age of the recorded, for example stored, data by means of the respective user, and/or
- to use at least some of the recorded data to compute at least one number or at least one frequentness for how often the motor vehicle and/or the respective user of the motor vehicle has passed at least some of the current journey route, wherein particularly the number is computable for each direction of travel or the frequentness is computable for each direction of travel and/or
- to supress the output of at least some of the information (12) associated with at least some of the current journey route if the computed number or the computed frequentness reaches, particularly exceeds, at least one defined or predetermined threshold value.

6. Driver assistance system according to at least one of Claims 1 to 5, **characterized in that** the recording device (20) can be supplied with
- data (62) concerning at least some of the output information (12) and/or
- the profile of the respective user, particularly the reaction of the respective user to the output information (12), for example information (12) regarding whether the respective user has heeded the warning notification and/or has followed the driving proposal, wherein if the user does not react to at least some of the output information (12) with at least a defined or predetermined frequentness, then the output of at least that portion of the information (12) to which the user has not reacted is deactivable.

7. Method for assisting at least one user of a motor vehicle, particularly at least one driver of a motor vehicle, wherein at least one piece of information (12), for example relating to the current journey route and/or to the active route guidance, particularly at least one warning notification and/or at least one driving proposal, for example at least one bend warning, at least one speed warning and/or at least one road sign warning, is output, wherein
- there is provision for the recording, particularly the storage,
-- of data concerning the movement, particularly concerning the navigation, for example concerning the direction of travel and/or concerning at least some of the journey route, of the motor vehicle and/or
-- of data concerning the motor vehicle, particularly concerning the speed of the motor vehicle, and/or
-- of data concerning the surroundings of the motor vehicle, particularly concerning the weather conditions and/or concerning the road conditions, and
- the selection of at least some of the information (12) to be output on the basis of at least some of the recorded data, particularly for activating and/or deactivating the output of at least some of the information (12) on the basis of the recorded data, wherein output of the warning and/or of the driving proposal involves at least one critical speed being learned, wherein analysis of the average speed of the user on bends is used to adapt at least one detected recommended speed associated with a respective bend, and wherein the computed recommended speed is increased or reduced if the average speed of the user on bends is permanently higher or permanently lower than the computed recommended speed, wherein in relation to the activation and/or in relation to the deactivation, the adaptation of the recommended speed can be made dependent on at least one parameter of the time information and/or of the driving conditions.

8. Method according to Claim 7, **characterized**
- **by** identification of the respective user currently using the motor vehicle,
- by computation of at least one profile of the respective user that reflects the respective driving habits and/or the respective driving style of the user by means of at least some of the recorded data, particularly computation of at least one number or at least one frequentness for how often the motor vehicle and/or the respective user of the motor vehicle has passed at least some of the current journey route, wherein optionally the number is computed for each direction of travel or the frequentness is computed for each direction of travel, and
- by selection of the information (12) to be output on the basis of the profile of the respective user, wherein particularly
-- the output of at least some of the information (12) is activated if the current driving habits and/or the current driving style of the respective user differs substantially from the computed profile of the respective user and/or
-- the output of at least some of the information (12) associated with at least some of the current journey route is suppressed if the computed number or the computed frequentness reaches, particularly exceeds, at least one defined or predetermined threshold value.

9. Method according to Claim 7 or 8, **characterized in that** the activation is effected by comparing the current driving behaviour of the user, particularly the current driving habits and/or the current driving style of the user, with the computed profile of the respective user, particularly with the computed standard driving habits and/or with the computed standard driving style of the respective user, particularly if an abnormal current driving behaviour of the user is detected, for example
- if the driving speed of the user at a given location is substantially higher than the average driving speed, particularly that stored for this user and/or for at least one other driver, and/or
- if the current driving behaviour of the user differs significantly, particularly is below or above at least one defined threshold value, in relation to the average driving behaviour of further or all drivers, such as in relation to the driving behaviour of the drivers of motor vehicles travelling next to the motor vehicle of the user, for example.

10. Method according to at least one of Claims 7 to 9, **characterized in that** in addition to the activation and/or deactivation, at least one parameter that is relevant on output of the warning and/or of the driving proposal is adapted, in particular the time of the bend warning is optimized, by means of the recordings of the sensor unit (30, 32, 34).

11. Method according to at least one of Claims 7 to 10, **characterized**
- **in that** the recording, particularly the storage, of at least some of the data is limited to at least one period or to at least one interval of time, particularly in that the age of the recorded, for example stored, data is limited by the respective user, and/or
- **in that** at least some of the recorded data is used to compute at least one number or at least one frequentness for how often the motor vehicle and/or the respective user of the motor vehicle has passed at least some of the current journey route, wherein particularly the number is computed for each direction of travel or the frequentness is computed for each direction of travel, and/or
- **in that** the threshold value for suppressing the output of at least some of the information (12) is defined, particularly by the respective user.

12. Method according to at least one of Claims 7 to 11, **characterized in that**
- data (62) concerning at least some of the output information (12) and/or
- the profile of the respective user, particularly the reaction of the respective user to the output information (12), for example information (12) regarding whether the respective user has heeded the warning notification and/or has followed the driving proposal, wherein if the user does not react to at least some of the output information (12) with at least a defined or predetermined frequentness, then the output of at least that portion of the information (12) to which the user has not reacted is deactivated are supplied.

13. Computer program product having at least one program portion for performing a method according to at least one of Claims 8 to 12, wherein this program portion is loadable into at least one driver assistance system (100) according to at least one of Claims 1 to 6 or is implementable in at least one driver assistance system (100) according to at least one of Claims 1 to 6.

14. Machine-readable, in particular computer-readable, data storage medium
- on which at least one computer program product according to Claim 13 is recorded and/or stored.

15. Use of at least one driver assistance system (100) according to at least one of Claims 1 to 6 and/or of a method according to at least one of Claims 7 to 12 and/or of at least one computer program product according to Claim 13 and/or of at least one machine-readable, in particular computer-readable, data storage medium according to Claim 14 in at least one motor vehicle that optionally has a navigation system (50).

## Revendications

1. Système d'assistance à la conduite (100), notamment, Système Avancé d'Assistance au Conducteur (ADAS, Advanced Driver Assistance System), destiné à au moins un véhicule automobile, dans lequel le système d'assistance à la conduite (100) comporte au moins un dispositif de sortie (10), notamment au moins un dispositif d'interface, destiné à fournir en sortie au moins une information (12) concernant par exemple le parcours actuellement suivi et/ou qui concerne le guidage actif vers la destination, notamment pour fournir en sortie au moins un avertissement et/ou au moins une proposition de conduite, par exemple pour fournir en sortie au moins un avertissement de virage, au moins un avertissement de vitesse et au moins un avertissement de signalisation routière, dans lequel il est prévu
- au moins un dispositif d'enregistrement (20), notamment au moins une unité à mémoire à laquelle peuvent être délivrés à l'aide d'au moins une unité de détermination de position et/ou d'au moins une unité de détection (30, 32, 34)
-- des données concernant le déplacement, notamment concernant la navigation, par exemple concernant la direction de déplacement et/ou concernant au moins une partie du parcours suivi du véhicule automobile et/ou
-- des données concernant le véhicule automobile, concernant notamment la vitesse du véhicule automobile, et/ou
-- des données concernant l'environnement du véhicule automobile, concernant notamment les conditions météorologiques et/ou concernant l'état de la route ; et
- au moins une unité de commande (40) permettant de sélectionner au moins une partie des informations (12) devant être fournies en sortie en fonction d'au moins une partie des données enregistrées dans le dispositif à mémoire (20), notamment pour activer et/ou désactiver la fourniture en sortie d'au moins une partie des informations (12) en fonction des données enregistrées, dans lequel, pour la fourniture en sortie de l'avertissement et/ou de la proposition de conduite, au moins une vitesse critique peut être apprise, dans lequel au moins une vitesse recommandée associée à un virage respectif peut être adaptée par le système d'assistance à la conduite (100), par analyse de la vitesse moyenne de l'utilisateur dans les virages, et dans lequel le système d'assistance à la conduite (100), notamment le système d'avertissement de virage, est conçu pour augmenter ou réduire la vitesse recommandée calculée lorsque la vitesse moyenne de l'utilisateur dans les virages est en permanence supérieure ou est en permanence inférieure à la vitesse recommandée calculée dans le système d'assistance à la conduite (100), dans lequel, par rapport à l'activation et/ou à la désactivation du système d'assistance à la conduite (100), notamment du système d'avertissement de virage, l'adaptation de la vitesse recommandée peut dépendre d'au moins un paramètre des informations temporelles et/ou des conditions de conduite.

2. Système d'assistance à la conduite selon la revendication 1, **caractérisé en ce que** le système d'assistance à la conduite (100) est conçu pour identifier
- l'utilisateur respectif utilisant à l'instant présent le véhicule automobile,
-- au moyen d'au moins un code d'identification et/ou
-- au moyen d'au moins un dispositif d'identification biométrique et/ou
-- au moyen de la clé du véhicule automobile et/ou
-- par utilisation d'au moins une partie des données enregistrées pour détecter les habitudes de conduite et/ou le style de conduite de l'utilisateur,
- pour calculer au moins un profil de l'utilisateur respectif reflétant les habitudes de conduite respectives et/ou le style de conduite respectif de l'utilisateur au moyen d'au moins une partie des données enregistrées, et
- pour sélectionner les informations (12) devant être fournies en sortie en fonction du profil de l'utilisateur respectif, dans lequel la fourniture en sortie d'au moins une partie des informations (12) peut notamment être activée lorsque les habitudes de conduite actuelles et/ou le style de conduite actuel de l'utilisateur diffèrent sensiblement du profil calculé de l'utilisateur respectif.

3. Système d'assistance à la conduite selon la revendication 1 ou 2, **caractérisé en ce que** le système d'assistance à la conduite (100) peut être activé en comparant le comportement de conduite actuel de l'utilisateur, notamment les habitudes de conduite actuelles et/ou le style de conduite actuel de l'utilisateur, au profil calculé de l'utilisateur respectif, notamment aux habitudes de conduite standard calculées et/ou au style de conduite standard calculé de l'utilisateur respectif, notamment lorsqu'un comportement de conduite actuel anormal de l'utilisateur peut être établi, par exemple
- lorsque la vitesse de conduite de l'utilisateur à un endroit donné est sensiblement supérieure à la vitesse de conduite moyenne stockée, notamment pour ledit utilisateur et/ou pour au moins un autre conducteur, et/ou
- lorsque le comportement de conduite actuel de l'utilisateur par rapport au comportement de conduite moyen d'autres conducteurs ou de tous les conducteurs, par exemple par rapport au comportement de conduite du conducteur de véhicules automobiles se déplaçant à proximité du véhicule automobile de l'utilisateur, s'écarte de manière significative, notamment s'abaisse en dessous ou s'élève au-dessus d'au moins une valeur de seuil définie.

4. Système d'assistance à la conduite selon au moins l'une des revendications 1 à 3, **caractérisé en ce qu'**en plus de l'activation et/ou de la désactivation, au moins un paramètre pertinent peut être adapté lors de la fourniture en sortie de l'avertissement et/ou de la proposition de conduite, au moyen de l'enregistrement de l'unité de détection (30, 32, 34), et en particulier, l'instant de l'avertissement de virage peut être optimisé.

5. Système d'assistance à la conduite selon au moins l'une des revendications 1 à 4, **caractérisé en ce que** le système d'assistance à la conduite (100) est conçu pour
- restreindre l'enregistrement, notamment le stockage, d'au moins une partie des données à au moins une période ou à au moins un intervalle de temps, notamment pour faire en sorte que l'utilisateur respectif limite l'ancienneté des données enregistrées, par exemple stockées, et/ou
- au moyen d'au moins une partie des données enregistrées, pour calculer au moins un nombre ou au moins une fréquence à laquelle le véhicule automobile et/ou l'utilisateur respectif du véhicule automobile a parcouru au moins une partie du parcours actuellement suivi, dans lequel le nombre peut être notamment calculé pour chaque direction de déplacement ou la fréquence peut être calculée pour chaque direction de déplacement, et/ou
- pour supprimer la fourniture en sortie d'au moins une partie de l'au moins une partie des informations (12) associées au parcours actuellement suivi dans le cas où le nombre calculé ou la fréquence calculée atteint au moins une valeur de seuil définie ou prédéterminée et en particulier, la dépasse.

6. Système d'assistance à la conduite selon au moins l'une des revendications 1 à 5, **caractérisé en ce qu'**il est possible de délivrer au dispositif d'enregistrement (20),
- des données (62) concernant au moins une partie des informations (12) fournies en sortie et/ou
- le profil de l'utilisateur respectif, notamment la réaction de l'utilisateur respectif aux informations (12) fournies en sortie, par exemple des informations (12) indiquant si l'utilisateur respectif a respecté le message d'avertissement et/ou si la proposition de conduite a été suivie, dans lequel, dans le cas où l'utilisateur ne réagit pas à au moins une partie des informations (12) fournies en sortie avec au moins une fréquence définie ou prédéterminée, la fourniture en sortie de ladite au moins une partie des informations (12) auxquelles l'utilisateur n'a pas réagi est désactivée.

7. Procédé d'assistance d'au moins un utilisateur d'un véhicule automobile, notamment d'au moins un conducteur d'un véhicule automobile, dans lequel au moins une information (12) concernant par exemple le parcours actuellement suivi et/ou le guidage actif vers la destination, notamment au moins un message d'avertissement et/ou au moins une proposition de conduite, par exemple au moins un avertissement de virage, au moins un avertissement de vitesse et/ou au moins un avertissement de signalisation routière, est fournie en sortie, dans lequel
- en enregistrant, notamment en stockant,
-- des données concernant le déplacement, concernant notamment la navigation, par exemple concernant la direction de déplacement et/ou concernant au moins une partie du parcours suivi par le véhicule automobile et/ou
-- des données concernant le véhicule automobile, concernant notamment la vitesse du véhicule automobile, et/ou
-- des données concernant l'environnement du véhicule automobile, concernant notamment les conditions météorologiques et/ou concernant l'état de la route, et
- il est prévu de sélectionner au moins une partie des informations (12) devant être fournies en sortie en fonction d'au moins une partie des données enregistrées, notamment pour activer et/ou pour désactiver la fourniture en sortie d'au moins une partie des informations (12) en fonction des données enregistrées, dans lequel, pour la fourniture en sortie de l'avertissement et/ou de la proposition de conduite, au moins une vitesse critique est apprise, dans lequel au moins une vitesse recommandée établie associée à un virage respectif est adaptée par analyse de la vitesse moyenne de l'utilisateur dans les virages, dans lequel la vitesse recommandée calculée est augmentée ou réduite lorsque la vitesse moyenne de l'utilisateur dans les virages est en permanence supérieure ou est en permanence inférieure à la vitesse recommandée calculée, dans lequel, par rapport à l'activation et/ou par rapport à la désactivation, l'adaptation de la vitesse recommandée peut être rendue dépendante d'au moins un paramètre des informations temporelles et/ou des conditions de conduite.

8. Procédé selon la revendication 7, **caractérisé**
- **par** l'identification de l'utilisateur respectif utilisant actuellement le véhicule automobile,
- par le calcul d'au moins un profil de l'utilisateur respectif reflétant les habitudes de conduite respectives et/ou le style de conduite respectif de l'utilisateur au moyen d'au moins une partie des données devant être enregistrées, notamment par calcul d'au moins un nombre ou d'au moins une fréquence à laquelle le véhicule automobile et/ou l'utilisateur respectif du véhicule automobile a parcouru au moins une partie du parcours actuellement suivi, dans lequel, de manière facultative, le nombre est calculé pour chaque direction de conduite ou la fréquence est calculée pour chaque direction de conduite, et
- par la sélection des informations (12) devant être fournies en sortie en fonction du profil de l'utilisateur respectif, dans lequel, notamment,
-- la fourniture en sortie d'au moins une partie des informations (12) est activée lorsque les habitudes de conduite actuelles et/ou le style de conduite actuel de l'utilisateur respectif diffèrent sensiblement du profil calculé de l'utilisateur respectif, et/ou
-- la fourniture en sortie d'au moins une partie de l'au moins une partie des informations (12) associées au parcours actuellement suivi est supprimée dans le cas où le nombre calculé ou la fréquence calculée atteint au moins une valeur de seuil définie ou prédéterminée et en particulier, le dépasse.

9. Procédé selon la revendication 7 ou 8, **caractérisé en ce que** l'activation est effectuée en comparant le comportement de conduite actuel de l'utilisateur, notamment les habitudes de conduite actuelles et/ou le style de conduite actuel de l'utilisateur, au profil calculé de l'utilisateur respectif, notamment aux habitudes de conduite standard calculées et/ou au style de conduite standard calculé de l'utilisateur respectif, notamment lorsqu'un comportement de conduite actuel anormal de l'utilisateur est établi, par exemple
- lorsque la vitesse de conduite de l'utilisateur à un endroit donné est sensiblement supérieure à la vitesse de conduite moyenne, notamment stockée pour ledit utilisateur et/ou pour au moins un autre conducteur, et/ou
- lorsque le comportement de conduite actuel de l'utilisateur par rapport au comportement de conduite moyen d'autres conducteurs ou de tous les conducteurs, comme par exemple en ce qui concerne le comportement de conduite des conducteurs des véhicules automobiles se déplaçant à proximité du véhicule automobile du conducteur, s'écarte de manière significative, notamment s'abaisse en dessous ou s'élève au-dessus d'au moins une valeur de seuil définie.

10. Procédé selon au moins l'une des revendications 7 à 9, **caractérisé en ce qu'**en plus de l'activation et/ou de la désactivation, au moins un paramètre pertinent peut être adapté, lors de la fourniture en sortie de l'avertissement et/ou de la proposition de conduite, au moyen de l'enregistrement de l'unité de détection (30, 32, 34), et en particulier, l'instant de l'avertissement de virage est optimisé.

11. Procédé selon au moins l'une des revendications 7 à 10, **caractérisé en ce que**
- l'enregistrement, notamment le stockage, d'au moins une partie des données est restreint à au moins une période ou à au moins un intervalle de temps, notamment en ce que l'ancienneté des données enregistrées, par exemple stockées, est limitée par l'utilisateur respectif, et/ou
- **en ce que**, au moyen d'au moins une partie des données enregistrées, au moins un nombre ou au moins une fréquence est calculée en ce qui concerne la fréquence à laquelle le véhicule automobile et/ou l'utilisateur respectif du véhicule automobile a parcouru au moins une partie du parcours actuellement suivi, dans lequel le nombre est notamment calculé pour chaque direction de conduite ou la fréquence est notamment calculée pour chaque direction de conduite, et/ou
- **en ce que** la valeur de seuil est définie pour la suppression de la fourniture en sortie d'au moins une partie des informations (12), notamment par l'utilisateur respectif.

12. Procédé selon au moins l'une des revendications 7 à 11, **caractérisé en ce que**
- des données (62) concernant au moins une partie des informations (12) fournies en sortie et/ou
- le profil de l'utilisateur respectif, notamment la réaction de l'utilisateur respectif aux informations (12) fournies en sortie, par exemple des informations (12) indiquant si l'utilisateur respectif a respecté le message d'avertissement et/ou si la proposition de conduite a été suivie, sont délivrées, dans lequel, dans le cas où l'utilisateur ne réagit pas à au moins une partie des informations (12) fournies en sortie avec au moins une fréquence définie ou prédéterminée, la fourniture en sortie d'au moins une partie des informations (12) à laquelle l'utilisateur n'a pas réagi est désactivée.

13. Produit de programme informatique comportant au moins une partie de programme destinée à mettre en oeuvre un procédé selon au moins l'une des revendications 8 à 12, dans lequel ladite partie de programme peut être chargée dans au moins un système d'assistance à la conduite (100) selon au moins l'une des revendications 1 à 6, ou peut être mis en oeuvre dans au moins un système d'assistance à la conduite (100) selon au moins l'une des revendications 1 à 6.

14. Support de données lisible par machine, notamment lisible par ordinateur,
- sur lequel est enregistré et/ou stocké au moins un produit de programme informatique selon la revendication 13.

15. Utilisation d'au moins un système d'assistance à la conduite (100) selon au moins l'une des revendications 1 à 6, et/ou d'un procédé selon au moins l'une des revendications 7 à 12, et/ou d'au moins un produit de programme informatique selon au moins la revendication 13 et/ou d'au moins un support de données lisible par machine, notamment lisible par ordinateur, selon la revendication 14, dans au moins un véhicule automobile qui comporte de manière facultative un système de navigation (50).
